# EUROPEAN PATENT SPECIFICATION

(11) **EP 1 661 358 B1**
(45) Date of publication and mention of the grant of the patent: **27.01.2010**
(21) Application number: 04741920.5
(22) Date of filing: 29.06.2004
(51) Int. Cl.: H04L 29/06, H04L 12/26

(54) **Preventing unauthorized access of computer network resources**
Verhinderung eines unzulässigen Zugriffs auf Resourcen in einem Computernetzwerk
Système pour prévenir un accés non autorisé aux ressources d'un réseau d'ordinateurs

(30) Priority: 28.08.2003 GB 0320057
(43) Date of publication of application: 31.05.2006
(73) Proprietor: MOTOROLA, INC., Schaumburg, IL 60196 (US)
(72) Inventor: JORGENSEN, Jens-Christian, 2600 Glostrup (DK)
(74) Representative: McCormack, Derek James
(86) International application number: PCT/EP2004/051290
(87) International publication number: WO 2005/022860

(56) References cited:
- EP-A- 0 762 707
- US-B1- 6 339 830
- MALKIN G S: "Dial-in virtual private networks using layer 3 tunneling" 2 November 1997 (1997-11-02), LOCAL COMPUTER NETWORKS, 1997. PROCEEDINGS., 22ND ANNUAL CONFERENCE ON MINNEAPOLIS, MN, USA 2-5 NOV. 1997, LOS ALAMITOS, CA, USA,IEEE COMPUT. SOC, US, PAGE(S) 555-561 , XP010252462 ISBN: 0-8186-8141-1 abstract; figures 1,2 paragraph [0001] - paragraph [0003]

## Description

### Field of the Invention

The present invention relates to data security systems, in general, and to a system and a method for preventing unauthorized access of network resources, in particular.

### Background of the Invention

With the advent of computer networks and the Internet in particular, computer users connected to these networks have access to a wide variety of resources. These resources are documents, files, technical and financial data as well as other electronic content. From one point of view such remote or local access to resources gives a possibility to use these resources independently from their location. From another point of view, as these resources in most cases are vital for their proprietors, it introduces a risk when they are accessed by someone who was not authorized.

From a technical point of view these resources are provided by network servers, which operate under control of operating systems. A remote or local client, which needs access to a resource sends a request to the server and, in response, the server sends the resource (gives access) to the remote or local client. As most of the resources are valuable and important they can be accessed only by authorized remote or local clients. One method of authentication of the remote or local client is a requirement of correct entry of the user's name,and password. Only those remote or local clients, which pass the authentication, can access the resource. A username - password scheme is an authentication mechanism that enables a server to restrict access to particular clients (users).

However it quite often happens that in one computer network different network resources work under control of different operating systems. In such situations the problem is that remote or local clients which connect to the Domain Controller, when they are logging on to the domain controlled by the Domain Controller, can by-pass the Domain Controller if the client installation is not an authorised Windows NT/2000 client installation.

This will give the unauthorised remote or local client access to network resources - e.g. UNIX servers, which are not controlled for authentication by the Windows NT/2000 Domain controller - without logging on to on the Domain Controller at session start up.

One solution known in the art, a so-called Remote Access Server (RAS), which performs authentication of the remote client, can be situated on the path between the remote client and the domain controller. The RAS after the authentication phase gives access to the network and not only the Domain Controller. This means that the Domain Controller can be by-passed after the remote client has been authenticated by the RAS. However from the point of view of network safety Domain Controller shall authenticate and authorise all sessions initiated by remote or local clients in order to place all the authentication process on one server.

EP-A-762707 describes a system for network access in which a remotely controlled filter controlled by an access check and control server is controlled to give access to an IP network.

### Summary of the invention

There is a need for a computer network security system and a method for preventing unauthorized access of network resources in a controlled domain, which alleviate or overcome the disadvantages of the prior art.

According to a first aspect of the present invention there is thus provided a computer network security system as claimed in claim 1.

According to a second aspect of the present invention there is thus provided a method for preventing unauthorized access of computer network resources, the method being as claimed in claim 7.

The present invention beneficially allows:
1. Reduction of network traffic between clients and servers which are in the domain controlled by the Domain Controller.
2. Clients to be authenticated by the Domain Controller to be situated anywhere (i.e. locally or remotely) relative to the domain controlled by the Domain Controller.

### Brief description of the drawings

The present invention will be understood and appreciated more fully from the following detailed description of embodiments taken in conjunction with the drawings in which:
FIG. 1 is a block diagram of a computer network security system in one embodiment of the present invention;
FIG. 2 is a block diagram of a computer network security system in second embodiment of the present invention,
FIG. 3 is a block diagram of a computer network security system in third embodiment of the present invention
FIG. 4 is a flow chart illustrating a method for preventing unauthorized access of computer network resources in one embodiment of the present invention,

### Detailed description of an embodiment of the invention

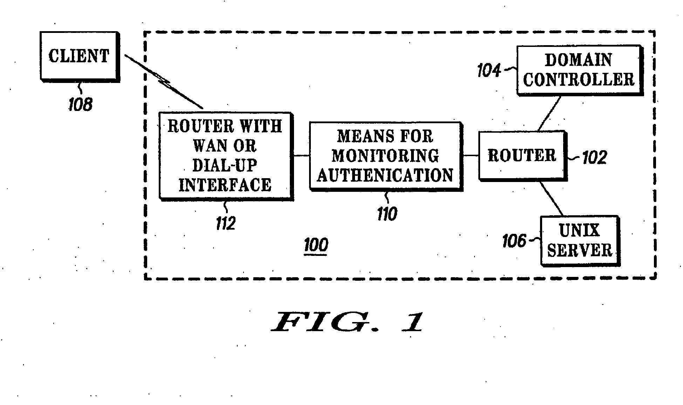

Referring to FIG. 1 one embodiment of a computer network security system 100 according to the present invention is shown. A computer network security system 100 comprises a network transport device 102, which is responsible for directing data packets to their destination IP addresses. In one embodiment said network transport device 102 can be a router and in another embodiment it can be a switch. Said network transport device is connected to a Domain Controller (also refered to as DC) 104 and to an UNIX server 106. A client 108 is operably connected to a means for monitoring authentication 110, which is connected to said network transport device 102. If said client 108 is located remotely from a domain controlled by said Domain Controller 104 said client is connected to said means for monitoring authentication 110 via router with WAN or dial-up interface.

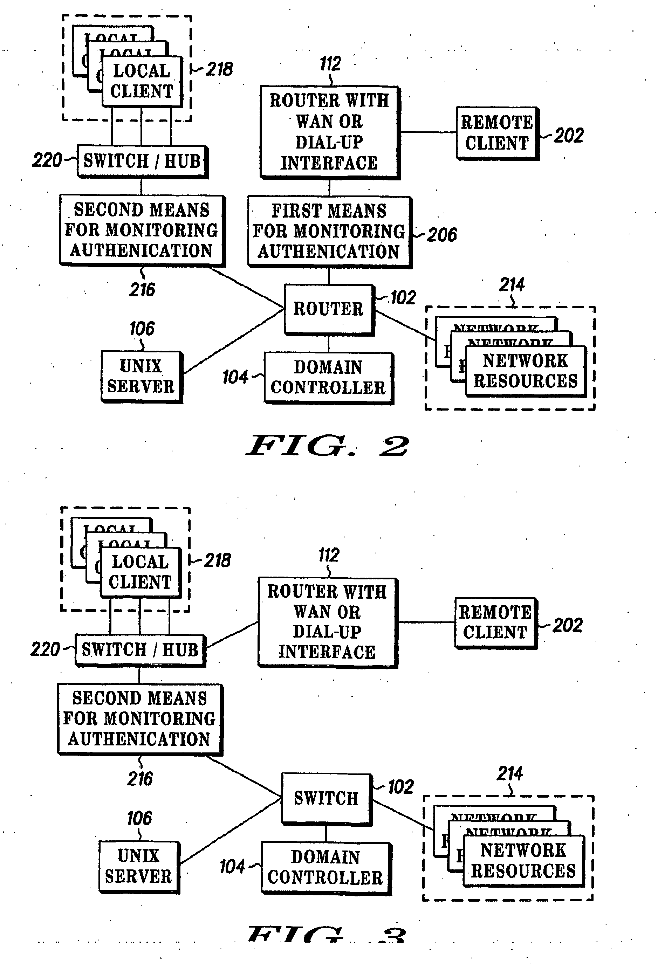

Referring to FIG. 2 and 3 another embodiment of said computer network security system is depicted. If at least one client is located within a domain controlled by said Domain Controller (local client 218) and at least one client is located remotely (remote client 202) said local client 218 is connected to a second means for monitoring authentication 216 via a switch or a hub 220 and said remote client is connected to a first means for monitoring authentication 206 via a router with WAN or dial-up interface 112. Alternatively if only one means for monitoring authentication is shared in the domain said router with WAN or dial-up interface 112 is connected to switch or said hub 220.

If said domain controller 104 and said UNIX server 106 work under control of different operating system then access to said UNIX server 106 is not controlled for authentication by said Domain Controller 104. When the client 108 is initiating a session to a server 108 or host within a domain under control of a domain controller 104 said client 108 is directed by a means for monitoring authentication 110, basing on destination IP address, to said domain controller 104. Said client 108 is authenticated by said Domain Controller 104 before access to network resources within said domain is granted or denied. Before authentication said means for monitoring authentication 110 allow for connection only with said Domain Controller 104.

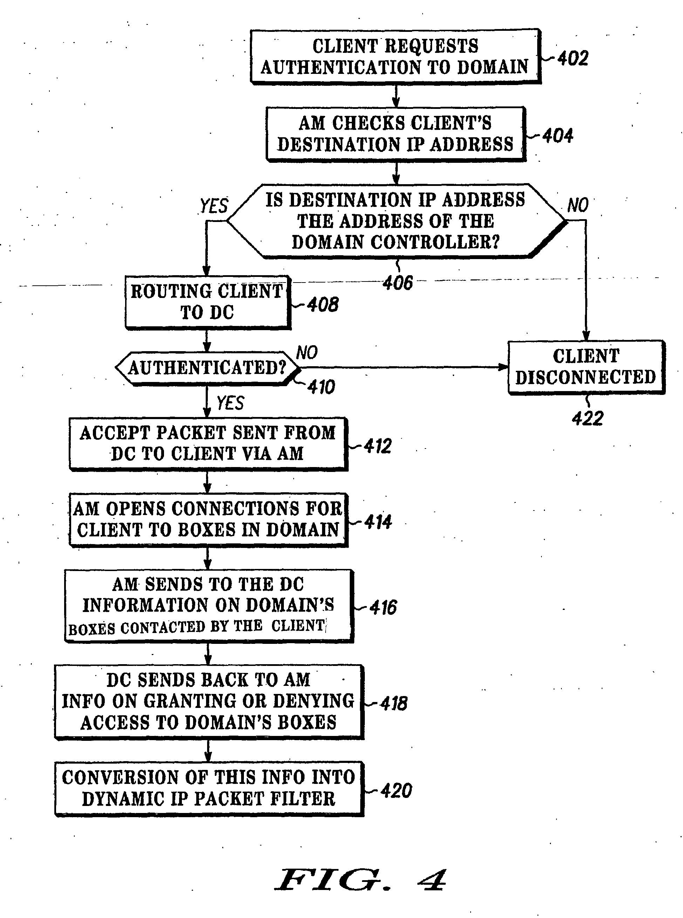

With reference to FIG. 4 a method for preventing unauthorized access of computer network resources is presented in one embodiment. On FIG. 4 said means for monitoring authentication is referred to as "AM". At the time of initiation of a session said client 108 requests authentication 402 to said domain controlled by said Domain Controller 104.

Said means for monitoring authentication 110 checks an IP destination address 404 of said client 108 to prevent accessing network resources which are not controlled for authentication. Only those clients whose IP destination addresses are that of said Domain Controller 406 are routed 408 to said Domain Controller 104 for authentication.

The authentication process can be based on encryption mechanism agreed between said client 108 and said domain controller 104. If said client is authenticated 410 an acceptance packet is sent 412 from said Domain Controller 104 to said client 108 via said means for monitoring authentication 110. Based on this information said means for monitoring authentication 110 opens connections 414 for said client to network resources in said domain. In consequence the path for that session is not limited to the path between the Domain Controller 104 and the client 108 but also other servers 106 and 214 can be contacted by said client 108 during that session. Said means for monitoring authentication 110 keeps track of the session based on the encryption algorithm and keys for that session. The authentication mechanism based on encryption and used by said means for monitoring authentication 110, takes place on the path between said means for monitoring authentication 110 and said client 108 only. It is because e.g. UNIX (RTM) servers and other network devices that the client 108 accesses may not have that encryption mechanism in place.

Said means for monitoring authentication 110 disconnects 422 said client 108 if said authentication failed or is not performed in predetermined period of time.

To keep control over the client connected to the domain said means for monitoring authentication 110 sends 416 to said Domain Controller 104 information on said network resources contacted by said client. Said means for monitoring authentication collects IP addresses and UDP/TCP port numbers contacted by said client 108 and this information is sent 416 to said Domain Controller 104. In response said Domain Controller 104 sends 418 to said means for monitoring authentication 110 information on granting or denying access to said network resources. Said means for monitoring authentication converts 420 said information on granting or denying access into dynamic IP packet filter. Said means for monitoring authentication 110 disconnects said client 108 if said client attempts to connect to network resources which said client is not authorised to.

Access to said network resources 214 is maintained as long as session initiated during authentication is active. Said means for monitoring authentication 110 determines if the session belongs to said client 108 based on said client's 108 source IP address and encryption mechanism.

To provide security of the computer network a standard encryption of client's 108 password used during authentication is performed by already implemented feature in said Domain Controller 104 and a client. In case of Domain Controller run under Windows NT/2000 the encryption mechanism takes place between the client and the Domain Controller so the authentication process is trusted. I.e. it is very difficult to copy this process for a client which is not the right client.

And for encryption of a session between said client 108 and said network resource, which is not controlled by said Domain Controller 104, a Virtual Private Network tunnel is used. Said Virtual Private Network tunnel is established between said client 108 and said means for monitoring authentication 110 or an access point on a local area network, e.g. router with WAN interface 112.

In one embodiment, the means for monitoring authentication 110 is implemented in software executable on said network transport device 102 (e.g. router). A software implementation is relatively low cost and allows easy reconfiguration. However hardware implementation is also possible. Nevertheless, it will be appreciated that the present invention may be implemented hardware or software and may be used in computer networks.

It is worth emphasising that embodiments of the present invention allows for authentication of clients that attempting to access network resources operating under control of different operating systems within one domain. Additionally all the authentication process and all information related to said network resources contacted by said client are placed on one server.

## Claims

1. A computer network security system (100) comprising, operably connected so as to form a computer network, a network transport device (102), at least one network resource (106) and a network controller controlling access to the at least one network resource (106), at least one client (108) and means for monitoring (110) authentication of said client to have access to said at least one network resource, the means for monitoring being operable to route a request by the client to the network controller for authentication by the network controller; and, if said client's request is authenticated by the network controller, to receive an acceptance of the client from the network controller and to open connection for said client via the network transport device to the at least one network resource; **characterised in that** the network controller is a Domain Controller (104) operable to control access to a network domain including network resources operating under control of different operating systems in the domain including an operating system different from that of the Domain Controller, and the means for monitoring (110) is connected between said network transport device and said client and is operable to use an authentication mechanism based on encryption which takes place on a path between the means for monitoring and the client only, and when the client requests access to said domain, to check an IP destination address indicated by said client and, if said IP destination address is that of said Domain Controller, to route the request by the client to said Domain Controller for authentication by the Domain Controller.

2. The system according to claim 1 wherein the network transport device is also connected between the means for monitoring authentication and the Domain Controller.

3. The computer network security system according to claim 1 or claim 2, wherein said means for monitoring authentication comprises means for disconnecting said client if said authentication fails or is not performed in a predetermined period of time or if said client attempts to connect to a network resource in said domain to which said client is not authorised to connect.

4. The computer network security system according to any one of the preceding claims, wherein a second network transport device equipped with WAN or dial-up interface is connected between said client and said means for monitoring authentication.

5. The computer network security system according to any one of the preceding claims, wherein said network transport device is a router or a switch.

6. The computer network security system according to any one of the preceding claims wherein the at least one client (202) is located remotely to the domain and the system includes a second means for monitoring (216) authentication of at least one further client to have access to at least one resource of said domain, the at least one further client (218) being located locally within the domain.

7. A method for preventing unauthorized access to at least one network resource in a network system (100) according to any one of the preceding claims; the method including the means for monitoring (110) using an authentication mechanism based on encryption which takes place on a path between the means for monitoring (110) and the client (108) only and checks (404) an IP destination address indicated by said client when the client requests (402) access to said domain and, if said IP destination address is that of said Domain Controller, the means for monitoring routes (408) the request by the client to said Domain Controller for authentication by the Domain Controller; and, if said client's request is authenticated (410) by the Domain Controller, the Domain Controller sends (412) an acceptance data packet to said client via said means for monitoring authentication; and in response to receiving the acceptance data packet the means for monitoring authentication opens connection for said client to network resources including at least one resource (106) having an operating system different from that of the Domain Controller (104).

8. The method according to claim 6 wherein authentication of the client by the Domain Controller is based on an encryption mechanism agreed between the client and the Domain Controller.

9. The method according to claim 7 or claim 8 which further comprises said means for monitoring authentication sending (416) to said Domain controller information on said network resources contacted by said client; said Domain Controller sending (418) to said means for monitoring information on granting or denying access to said network resources; and said means for monitoring authentication converting (420) said information on granting or denying access into a dynamic IP packet filter.

10. The method according to any one of claims 7 to 9 wherein prior to authentication by the Domain Controller, the means for monitoring (110) permits a connection route only to the Domain Controller IP address.

11. The method according to any one of claims 7 to 10, wherein for identification of said network resources to be contacted by the client, the means for monitoring (110) sends to the Domain Controller IP addresses and UDP/TCP port numbers of the resources.

12. The method according to any one of claims 7 to 11, wherein said means for monitoring authentication disconnects (422) said client if said authentication fails, if said authentication is not performed in a predetermined period of time or if said client attempts to connect to a network resource to which said client is not authorised to connect.

13. The method according to any one of claims 7 to 12, wherein a Virtual Private Network tunnel is established between said client and a network resource operating under an operating system different from that of the Domain Controller.

## Patentansprüche

1. Computernetzwerksicherheitssystem (100), das die folgenden Komponenten umfasst, welche funktionell derart miteinander verbunden sind, das sie ein Computernetzwerk bilden: eine Netzwerktransportvorrichtung (102), mindestens eine Netzwerkressource (106) und eine Netzwerksteuereinrichtung, die den Zugriff auf die mindestens eine Netzwerkressource (106) steuert, mindestens einen Client (108) und Mittel zum Überwachen (110) einer Authentifizierung des genannten Client, um Zugriff auf die genannte mindestens, eine Netzwerkressource zu erhalten, wobei die Mittel zum Überwachen derart betreibbar sind, dass sie eine Anfrage des Client an die Netzwerksteuereinrichtung zur Authentifizierung durch die Netzwerksteuereinrichtung weiterleiten; und sie, falls die Anfrage des genannten Client durch die Netzwerksteuereinrichtung authentifiziert wird, von der Netzwerksteuereinrichtung eine Annahme des Client empfangen und eine Verbindung für den genannten Client über die Netzwerktransportvorrichtung zu der mindestens einen Netzwerkressource eröffnen; **dadurch gekennzeichnet, dass** die Netzwerksteuereinrichtung ein Domain Controller (104) ist, der so betreibbar ist, dass er den Zugriff auf eine Netzwerkdomäne steuert, welche Netzwerkressourcen aufweist, die unter der Steuerung verschiedener Betriebssysteme in der Domäne arbeiten, einschließlich eines Betriebssystems, das sich von demjenigen des Domain Controllers unterscheidet, und die Mittel zum Überwachen (110) zwischen die genannte Netzwerktransportvorrichtung und den genannten Client geschaltet sind und derart betreibbar sind, dass sie einen Authentifizierungsmechanismus verwenden, der auf einer Verschlüsselung beruht und nur auf einem Pfad zwischen den Mitteln zum Überwachen und dem Client stattfindet, und sie, wenn der Client Zugriff auf die genannte Domäne anfordert, eine von dem genannten Client angegebene IP-Zieladresse überprüfen, und sie, falls die genannte IP-Zieladresse diejenige des genannten Domain Controllers ist, die Anfrage des Client zur Authentifizierung durch den Domain Controller an den genannten Domain Controller weiterleiten.

2. System gemäß Anspruch 1, wobei die Netzwerktransportvorrichtung auch zwischen die Mittel zum Überwachen der Authentifizierung und den Domain-Controller geschaltet ist.

3. Computernetzwerksicherheitssystem gemäß Anspruch 1 oder Anspruch 2, wobei die genannten Mittel zum Überwachen der Authentifizierung Mittel umfassen, die geeignet sind, den genannten Client abzuschalten, wenn die genannte Authentifizierung fehlschlägt oder nicht innerhalb einer vorbestimmten Zeitdauer durchgeführt wird, oder wenn der genannte Client versucht, sich mit einer Netzwerkressource in der genannten Domäne, für welche der genannte Client keine Verbindungserlaubnis hat, zu verbinden.

4. Computernetzwerksicherheitssystem gemäß einem der vorhergehenden Ansprüche, wobei eine zweite Netzwerktransportvorrichtung, die mit einer WAN- oder Einwahl-Schnittstelle ausgestattet ist, zwischen den genannten Client und die genannten Mittel zum Überwachen der Authentifizierung geschaltet ist.

5. Computernetzwerksicherheitssystem gemäß einem der vorhergehenden Ansprüche, wobei die genannte Netzwerktransportvorrichtung ein Vermittler oder ein Schalter ist.

6. Computernetzwerksicherheitssystem gemäß einem der vorhergehenden Ansprüche, wobei sich der mindestens eine Client (202) fern von der Domäne befindet und das System zweite Mittel zum Überwachen (216) der Authentifizierung mindestens eines weiteren Client, um Zugriff auf mindestens eine Ressource der genannten Domäne zu erhalten, aufweist, wobei sich der mindestens eine weitere Client (218) lokal innerhalb der Domäne befindet.

7. Verfahren zum Verhindern eines nicht autorisierten Zugriffs auf mindestens eine Netzwerkressource in einem Netzwerksystem (100) gemäß einem der vorhergehenden Ansprüche; wobei in dem Verfahren die Mittel zum Überwachen (110) einen Authentifizierungsmechanismus verwenden, der auf einer Verschlüsselung beruht und nur auf einem Pfad zwischen den Mitteln zum Überwachen (110) und dem Client (108) stattfindet und eine von dem genannten Client angegebene IP-Zieladresse überprüft (404), wenn der Client Zugriff auf die genannte Domäne anfordert (402), und wobei die Mittel zum Überwachen die Anfrage des Client zur Authentifizierung durch den Domain Controller an den genannten Domain Controller weiterleiten (408), wenn die genannte IP-Zieladresse diejenige des genannten Domain Controllers ist; und wobei der Domain Controller dem genannten Client über die genannten Mittel zum Überwachen der Authentifizierung ein Annahme-Datenpaket sendet (412), wenn die Anfrage des genannten Client von dem Domain Controller authentifiziert wird (410); und wobei die Mittel zum Überwachen der Authentifizierung in Antwort auf den Empfang des Annahme-Datenpaketes eine Verbindung für den genannten Client zu Netzwerkressourcen eröffnen, welche mindestens eine Ressource (106) einschließen, die ein Betriebssystem aufweist, das sich von demjenigen des Domain Controllers (104) unterscheidet.

8. Verfahren gemäß Anspruch 6, wobei die Authentifizierung des Client durch den Domain Controller auf einem zwischen dem Client und dem Domain Controller vereinbarten Verschlüsselungsmechanismus beruht.

9. Verfahren gemäß Anspruch 7 oder Anspruch 8, das weiter folgendes umfasst: die genannten Mittel zum Überwachen der Authentifizierung senden (416) dem genannten Domain Controller Information über die genannten von dem genannten Client kontaktierten Netzwerkressourcen; der genannte Domain Controller sendet (418) den genannten Mitteln zum Überwachen Information über ein Gewähren oder Verweigern des Zugriffs auf die genannten Netzwerkressourcen; und die genannten Mittel zum Überwachen der Authentifizierung wandeln (420) die genannte Information über Gewähren oder Verweigern des Zugriffs in einen dynamischen IP-Paketfilter um.

10. Verfahren gemäß einem der Ansprüche 7 bis 9, wobei die Mittel zum Überwachen (110) vor der Authentifizierung durch den Domain Controller einen Verbindungsweg nur zu der IP-Adresse des Domain Controllers erlauben.

11. Verfahren gemäß einem der Ansprüche 7 bis 10, wobei zur Identifizierung der von dem Client zu kontaktierenden genannten Netzwerkressourcen die Mittel zum Überwachen (110) dem Domain Controller IP-Adressen und UDP/TCP-Portnummern der Ressourcen senden.

12. Verfahren gemäß einem der Ansprüche 7 bis 11, wobei die genannten Mittel zum Überwachen der Authentifizierung den genannten Client abschalten (422), falls die genannte Authentifizierung fehlschlägt, falls die genannte Authentifizierung nicht innerhalb einer vorbestimmten Zeitdauer vollzogen wird, oder falls der genannte Client versucht, sich mit einer Netzwerkressource, für die der genannte Client keine Verbindungserlaubnis hat, zu verbinden.

13. Verfahren gemäß einem der Ansprüche 7 bis 12, wobei zwischen dem genannten Client und einer Netzwerkressource, die unter einem anderen Betriebssystem als demjenigen des Domain Controllers arbeitet, ein Tunnel gemäß einem Virtuellen Privates Netzwerk eingerichtet wird.

## Revendications

1. Système (100) de sécurité de réseau informatique comprenant, connectés de manière fonctionnelle de façon à former un réseau informatique, un dispositif (102) de transport sur réseau, au moins une ressource (106) de réseau et un régisseur de réseau commandant l'accès à l'au moins une ressource (106) de réseau, au moins un client (108) et un moyen (110) destiné à surveiller l'authentification dudit client pour avoir accès à ladite au moins une ressource de réseau, le moyen destiné à surveiller étant utilisable pour acheminer une demande faite par le client jusqu'au régisseur de réseau pour authentification par le régisseur de réseau ; et, si ladite demande du client est authentifiée par le régisseur de réseau, pour recevoir une acceptation du client en provenance du régisseur de réseau et pour ouvrir une connexion pour ledit client via le dispositif de transport sur réseau jusqu'à l'au moins une ressource de réseau ; **caractérisé en ce que** le régisseur de réseau est un régisseur (104) de domaine utilisable pour commander l'accès à un domaine de réseau incluant des ressources de réseau opérant sous les ordres de différents systèmes d'exploitation dans le domaine y compris un système d'exploitation différent de celui du régisseur de domaine, et **en ce que** le moyen (110) destiné à surveiller est connecté entre ledit dispositif de transport sur réseau et ledit client et est utilisable pour utiliser un mécanisme d'authentification basé sur un cryptage qui a lieu sur le trajet entre le moyen de surveillance et le client seulement, et, lorsque le client demande un accès audit domaine, pour contrôler une adresse de protocole d'Internet (IP pour "Internet Protocol") de destination indiquée par ledit client et, si ladite adresse IP de destination est celle dudit régisseur de domaine, pour acheminer la demande faite par le client jusqu'audit régisseur de domaine pour authentification par le régisseur de domaine.

2. Système selon la revendication 1, dans lequel le dispositif de transport sur réseau est aussi connecté entre le moyen destiné à surveiller l'authentification et le régisseur de domaine.

3. Système de sécurité de réseau informatique selon la revendication 1 ou la revendication 2, dans lequel ledit moyen destiné à surveiller l'authentification comprend un moyen destiné à déconnecter ledit client si ladite authentification échoue ou n'est pas effectuée dans une période prédéterminée de temps ou si ledit client tente de se connecter à une ressource de réseau dans ledit domaine à laquelle ledit client n'est pas autorisé à se connecter.

4. Système de sécurité de réseau informatique selon l'une quelconque des revendications précédentes, dans lequel un second dispositif de transport sur réseau équipé d'une interface de réseau à longue distance (WAN pour "Wide Area Network") ou de réseau automatique est connecté entre ledit client et ledit moyen destiné à surveiller l'authentification.

5. Système de sécurité de réseau informatique selon l'une quelconque des revendications précédentes, dans lequel ledit dispositif de transport sur réseau est un routeur un autocommutateur.

6. Système de sécurité de réseau informatique selon l'une quelconque des revendications précédentes, dans lequel l'au moins un client (202) est situé à distance du domaine et dans lequel le système inclut un second moyen (216) destiné à surveiller l'authentification d'au moins un client supplémentaire pour avoir accès à l'au moins une ressource dudit domaine, l'au moins un client supplémentaire (218) étant situé localement à l'intérieur du domaine.

7. Procédé de prévention d'accès non autorisé à au moins une ressource de réseau dans un système (100) de réseau selon l'une quelconque des revendications précédentes ; le procédé incluant le moyen (110) destiné à surveiller utilisant un mécanisme d'authentification basé sur un cryptage qui a lieu sur un trajet entre le moyen (110) destiné à surveiller et le client (108) seulement et qui contrôle (404) une adresse IP de destination indiquée par ledit client lorsque le client demande (402) accès audit domaine et, si ladite adresse IP de destination est celle dudit régisseur de domaine, le moyen destiné à surveiller achemine (408) la demande faite par le client jusqu'audit régisseur de domaine pour authentification par le régisseur de domaine ; et, si ladite demande du client est authentifiée (410) par le régisseur de domaine, le régisseur de domaine envoie (412) un paquet de données d'acceptation audit client via ledit moyen destiné à surveiller l'authentification ; et, en réponse à la réception du paquet de données d'acceptation, le moyen destiné à surveiller l'authentification ouvre pour ledit client une connexion aux ressources de réseau incluant au moins une ressource (106) ayant un système d'exploitation différent de celui du régisseur (104) de domaine.

8. Procédé selon la revendication 6, dans lequel l'authentification du client par le régisseur de domaine est basée sur un mécanisme de cryptage convenu entre le client et le régisseur de domaine.

9. Procédé selon la revendication 7 ou la revendication 8, qui comprend en outre ledit moyen destiné à surveiller l'authentification envoyant (416) audit régisseur de domaine de l'information sur lesdites ressources de réseau contactées par ledit client ; ledit régisseur de domaine envoyant (418) audit moyen destiné à surveiller de l'information sur l'attribution ou le refus d'accès auxdites ressources de réseau ; et ledit moyen destiné à surveiller l'authentification convertissant (420) ladite information sur l'attribution ou le refus d'accès en un filtre dynamique de paquets sous IP.

10. Procédé selon l'une quelconque des revendications 7 à 9, dans lequel, avant l'authentification par le régisseur de domaine, le moyen (110) destiné à surveiller autorise une route de connexion seulement à l'adresse IP de régisseur de domaine.

11. Procédé selon l'une quelconque des revendications 7 à 10, dans lequel, pour identification desdites ressources de domaine à contacter par le client, le moyen (110) destiné à surveiller envoie au régisseur de domaine les adresses IP et les numéros de port de protocole de datagrammes d'utilisateur/protocole de commande de transmission (UDP/TCP pour "User Datagram Protocol/Transmission Control Protocol") des ressources.

12. Procédé selon l'une quelconque des revendications 7 à 11, dans lequel ledit moyen destiné à surveiller l'authentification déconnecte (422) ledit client si ladite authentification échoue, si ladite authentification n'est pas effectuée dans une période prédéterminée de temps ou si ledit client tente de se connecter à une ressource de réseau à laquelle ledit client n'est pas autorisé à se connecter.

13. Procédé selon l'une quelconque des revendications 7 à 12, dans lequel un tunnel de réseau privé virtuel est établi entre ledit client et une ressource de réseau opérant sous un système d'exploitation différent de celui du régisseur de domaine.
